# EUROPEAN PATENT APPLICATION

(11) **EP 1 594 050 A1**
(43) Date of publication of application: **09.11.2005**
(21) Application number: 05005652.2
(22) Date of filing: 15.03.2005
(51) Int. Cl.: G06F 9/44

(54) **Method and system for planning and control/estimation of software size driven by standard representation of software structure**

(30) Priority: 16.03.2004 US 553631 P; 16.03.2004 US 553464 P
(71) Applicant: Ramco Systems Limited, Chennai, Tamilnadu 600 113 (IN)
(72) Inventor: Seetharaman, Subramanian, Velechery, Chennai 600 042 (IN); Gopalsamy, Kannappan, Foreshore Estate Chennai 600 028 (IN); Sundararajan, Parthasarathy, Chennai 600 083 (IN); Devalla, Raghuram, Adambakkam, Chennai 600 088 (IN); Ramaswamy, Srinivasan, Ganga Nagar Nanganallur Chennai 600 061 (IN); Meenakshisundaram, Krishnamoorthy, Abhiramapuram, Chennai 600 018 (IN)
(74) Representative: Clarke, Alison Clare

(57) **Abstract**

A system (100) and method to perform planning and control/estimation for software modules (112) within an automated development system comprise: a software coding and testing module (111) for defining and testing software applications, a software module database (116) for maintaining software modules that may be part of software applications, and a software estimation module (112) for estimating software development activity. The software estimation module (112) comprises a release set estimation module (304) and a function point analysis module (212) and analyzes work request data (511) for impact upon software module structure, generates work request dependency data (512) using work request data, estimates size (513) of software modules, estimates development effort (514) needed for the software modules in the software application, initiates modifications (515) on a release plan for the software application using estimates for the size of the software modules and the estimate for the development effort needed, estimates manpower requirements (516) using estimates for the size of the software modules and the estimate for the development effort needed, groups similar work requests (517) into release sets, and develops release sets (518) to be taken for development work.

## Description

### FIELD OF THE INVENTION

Embodiments of the present invention relate generally to the technical field of software development and, in one exemplary embodiment, to methods and systems to perform planning and control/estimation for software modules within an automated development system.

### BACKGROUND

In software development timely deliveries depend on effective release set planning. The release set planning is driven by the following factors: functionality or features required for marketability, size of the release sets, time for delivery, and manpower availability, including both skill and number. The effort is driven by the size of the release set and the elapsed time is governed by the manpower availability and parallelization of work. Without proper mechanisms for sizing the release set it becomes difficult to predict the delivery time of the release during the early planning stages. Without early indications it becomes difficult for other arms of the business to plan for the work that is dependant on the release sets.

There is a need for a basis for arriving at the functionality to be incorporated in a release set based on the priority as well as the size. It becomes difficult to choose work requests and consolidate them for a release set taking into account their dependencies on one another and many times release sets are not complete due to these dependencies.

As part of this estimation process, various estimation and analysis tools may be employed. Function Point Analysis (FPA) is a sizing measure of clear business significance. First made public by Allan Albrecht of IBM in 1979, the FPA technique quantifies the functions contained within software in terms that are meaningful to the software users. The measure relates directly to the business requirements that the software is intended to address. It can therefore be readily applied across a wide range of development environments and throughout the life of a development project, from early requirements definition to full operational use. Other business measures, such as the productivity of the development process and the cost per unit to support the software, can also be readily derived.

The function point measure itself is derived in a number of stages. Using a standardized set of basic criteria, each of the business functions is a numeric index according to its type and complexity. These indices are totaled to give an initial measure of size which is then normalized by incorporating a number of factors relating to the software as a whole. The end result is a single number called the Function Point index which measures the size and complexity of the software product.

In summary, the function point technique provides an objective, comparative measure that assists in the evaluation, planning, management and control of software production. The function point based sizing methodology requires identification of the transaction function types and the complexities involved in the application. These parameters are well known in the use of FPA tools.

Adapting this FPA methodology requires a mapping of the function types to the software structure. The conventional approach here would require identification of these function types based on the understanding of the application requirements and with the help of the counting rules arrive at the software size as Function points.

However, the issue here is to understand the function types given in the IFPUG manual together with the counting rules and correlate with the software structure captured as a data model. The challenge here is to: Arrive at the estimation process from the software structure captured as a model, Bring in consistency to the estimation process, and Enable continuous / iterative counting to refine the size estimates progressively in the development life cycle.

The above challenges are people skill dependent and the required result refines over a period of time and also the implementation is based on judgmental skills and this in turn also results in refining over a period of time.

### SUMMARY

The below described embodiments of the present invention are directed to methods and systems to perform planning and control/estimation for software modules within an automated development system. According to one embodiment, there is provided a system for estimating software development activity, a software module database for maintaining software modules that may be part of software applications and are needed to be changed due to customer requests, and a software estimation module for estimating software development activity for these changes. The release set planning is based on the software estimation.

In another embodiment, there is provided a method for analyzing interactions among software artifacts. The method analyzes work request data for impact upon software model structure, generates work request dependency data using work request data to detect interrelationships between components of the software application to be modified as part of the release set data for a particular version of the software application, estimates size of software modules, estimates development effort needed for the software modules in the software application, initiates modifications on a release plan for the software application using estimates for the size of the software modules and the estimate for the development effort needed, estimates manpower requirements using estimates for the size of the software modules and the estimate for the development effort needed, groups similar work requests into release sets, and develops release sets to be taken for development work.

In yet another embodiment, there is provided a machine-readable medium storing a set on instructions that, when executed by a machine, cause the machine to perform a method for analyzing interactions among software artifacts. The method analyzes work request data for impact upon software module structure, generates work request dependency data using work request data to detect interrelationships between components of the software application to be modified as part of the release set data for a particular version of the software application, estimates size of software modules, estimates development effort needed for the software modules in the software application, initiates modifications on a release plan for the software application using estimates for the size of the software modules and the estimate for the development effort needed, estimates manpower requirements using estimates for the size of the software modules and the estimate for the development effort needed, groups similar work requests into release sets, and develops release sets to be taken for development work.

The details of one or more embodiments of the invention are set forth in the accompanying drawings and the description below. Other features, objects, and advantages of the invention will be apparent from the description and drawings, and from the claims.

### BRIEF DESCRIPTON OF THE DRAWINGS

FIG. 1 is a block diagram depicting a system having a software development system in accordance with one exemplary embodiment of the present invention.

FIG. 2 is a block diagram illustrating a general programmable processing system for use in programmable processing system in accordance with various embodiments of the present invention.

FIG. 3 is a block diagram depicting a release set planning module within a software development system in accordance with one exemplary embodiment of the present invention.

FIGS. 4A and 4B are diagrams of sample screen displays depicting estimation mechanism for work requests according to an exemplary embodiment of the present invention.

FIG 5 is a flow diagram of a software development using software development estimation module within a software development system according to an exemplary embodiment of the present invention.

FIGS. 6A-6C are block diagrams of function point analysis modules within a software development system according to an exemplary embodiment of the present invention.
FIG. 7 is a block diagram depicting a function point analysis modules within a software development system in accordance with one exemplary embodiment of the present invention.

FIG 8 is a flow diagram of a software development using function point analysis modules within a software development system according to an exemplary embodiment of the present invention.

### DETAILED DESCRIPTION

A method and system to perform estimation for software modules within an automated development system are described. In the following description, for purposes of explanation, numerous specific details are set forth in order to provide a thorough understanding of the present invention. It will be evident, however, to one skilled in the art that the present invention may be practiced without these numerous specific details.

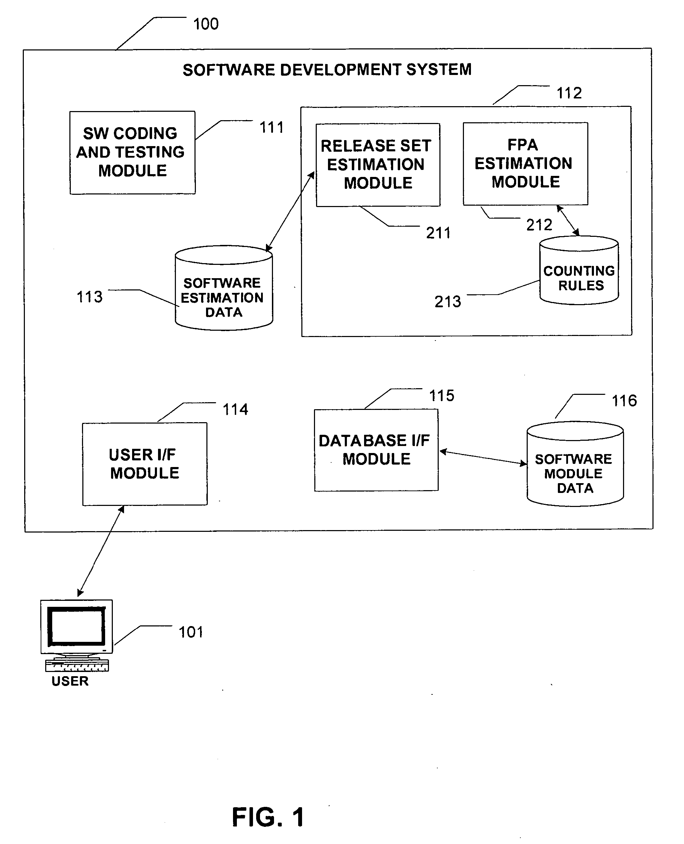

FIG. 1 is a block diagram depicting a system having a software development system in accordance with one exemplary embodiment of the present invention. Software development system 100 includes a software coding module 111, a software estimation module 112, a user interface module 114 and a database interface module 115. The system 100 also may include a set of one or more databases to maintain data associated with the software development process. These databases may include a software estimation database 113 and a software module data database 116.

A user 101 connects to system 100 through user interface module 114 to create software code 111. User 101 may connect to user interface module 114 using a client computer, a terminal, or similar user input device. The communications connection may include any communications channel such as a serial connection, a network connection and a direct hard-wired connection to permit user 101 to interact with system 100.

User 101 develops software source code and tests the developed code that is subsequently stored in software module database 116 for later use. User 101 interacts with the software module database (source safe) 116 through a database (source safe) interface module 115 that performs functions necessary to store and retrieve the modules from the database 116.

As part of any software development activity, estimation of the time, effort and resources needed to complete development of working applications is typically performed. Automated estimation tools are typically included with a software development system 100 to permit the estimation tools to utilize actual software module data as needed as part of the estimation process.

Software estimation module 112 performs this estimation process within an exemplary embodiment of the present invention. Software estimation module 112 utilizes a release set estimation module 211 and an FPA estimation module 212 to perform portions of the software estimation processing. The release set estimation module 211 uses a software estimation data database to maintain estimation data associated with the software modules that may be included within an application when the final release set for a version of an application is completed. The FPA estimation module 212 performs a function point analysis (FPA) using counting rules maintained within a counting rules database 213 to estimate the amount of effort that may be needed in the development of various software modules. These modules together permit user 101 to estimate the development activities for applications as well as track completion of the component software modules during the development activity.

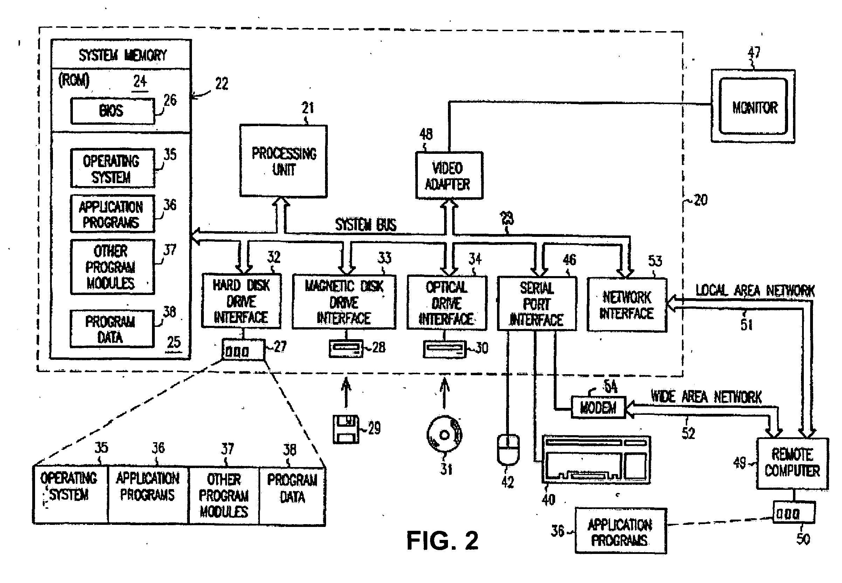

FIG. 2 is an overview diagram of hardware and operating environment in conjunction with which embodiments of the invention may be practiced. The description of FIG. 2 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

In the embodiment shown in FIG. 2, a hardware and operating environment is provided that is applicable to any of the servers and/or remote clients shown in the other Figures.

As shown in FIG. 2, one embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

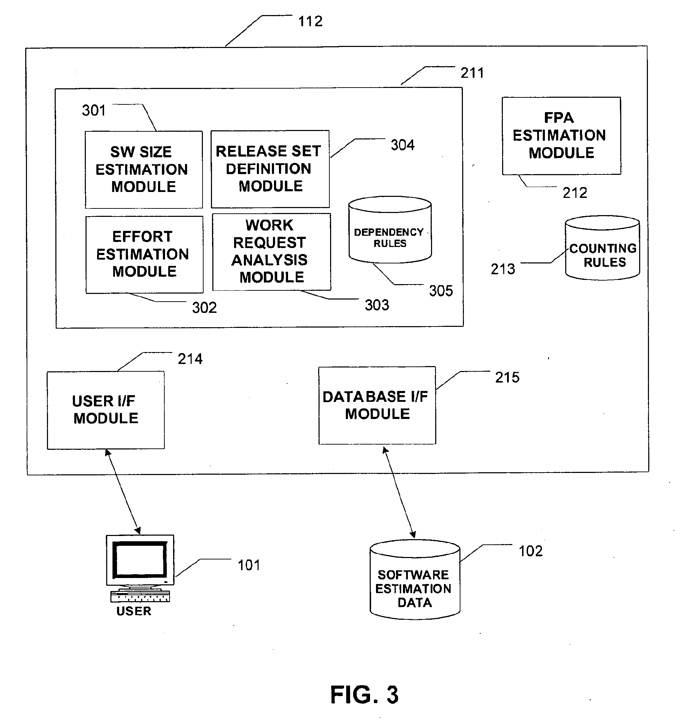

The computer 20 may operate in a networked environment using logical connections to one or more remote computers or servers, such as remote computer 49. These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in FIG. 3 include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the detailed description of embodiments of the invention, with each claim standing on its own as a separate embodiment. It is understood that the above description is intended to be illustrative, and not restrictive. It is intended to cover all alternatives, modifications and equivalents as may be included within the spirit and scope of the invention as defined in the appended claims. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

FIG. 3 is a block diagram depicting a release set planning module within a software development system in accordance with one exemplary embodiment of the present invention. An integrated approach to planning release sets in tandem with estimation of the size of functionality is described as part of this invention. In this approach all change requests on the existing software is analyzed for impact and a work request detailing the changes in different work products are specified. This work request is used for computing the software size. This size is translated to cater for different roles depending on the types of change in different work product.

For example if there is a change in the user interface the system triggers a change requests for incorporating change in the on line help, training manual which are typically done by different roles in a software development organization. This size of the software along with different work product / deliverable changes is used to initiate plan modifications. Since the exact nature of work involved is known it is possible to arrive at the manpower requirement along with their skill sets. It is possible to do this for a single work request or for a group of work requests. The system has a capability for detecting work request dependencies based on certain rules and ensures that all dependent work requests are grouped into a release set.

Facility for doing a "what if analysis" allowing for adding work requests to a release set helps in planning for an optimal release set. The estimation of size gets refined during the later stages of SDLC and facilities are provided to use the refined estimates for proper planning and control.

The planning artifacts are the same as the release artifacts of the software and hence a tight control on the final software release is possible throughout the development process. This leads to better predictability of the release set.

In performing this analysis, the release set estimation module 211 performs the above functions. The release set estimation module 211 includes a set of modules to perform various functions needed to complete the analysis. These modules include a software size estimation module 301, a software effort estimation module 302, a work request analysis module 303, and a release set definition module 304. The release set definition module 304 permits the specification of the application that will be used when the estimation process occurs.

The software size estimation module 301 automatically estimates the size of each software module needed within an application and to use these estimations to determine an overall estimate for the size of the application when completed. The software effort estimation module 302 automatically estimates the effort needed to develop each software module within an application and to use these estimations to determine an overall estimate for the size of the application when completed. Both the software size estimation module 301 and the software effort estimation module 302 use the definition of the application specified by the release set definition module 304 in making the respective estimates.

The work request analysis module 303 analyzes work request data that defines new modules and modifications to existing modules to make modifications of estimates that have been previously generated by the software size estimation module 301 and the software effort estimation module 302. These modules work together to permit user 101 to perform interactive what-if analysis on development activities both before and during development activities.

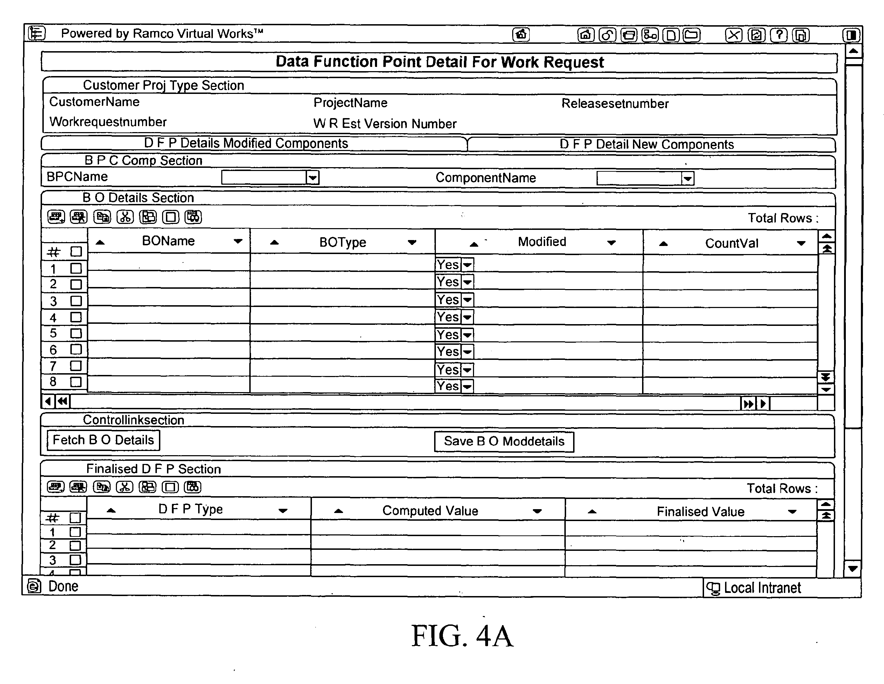

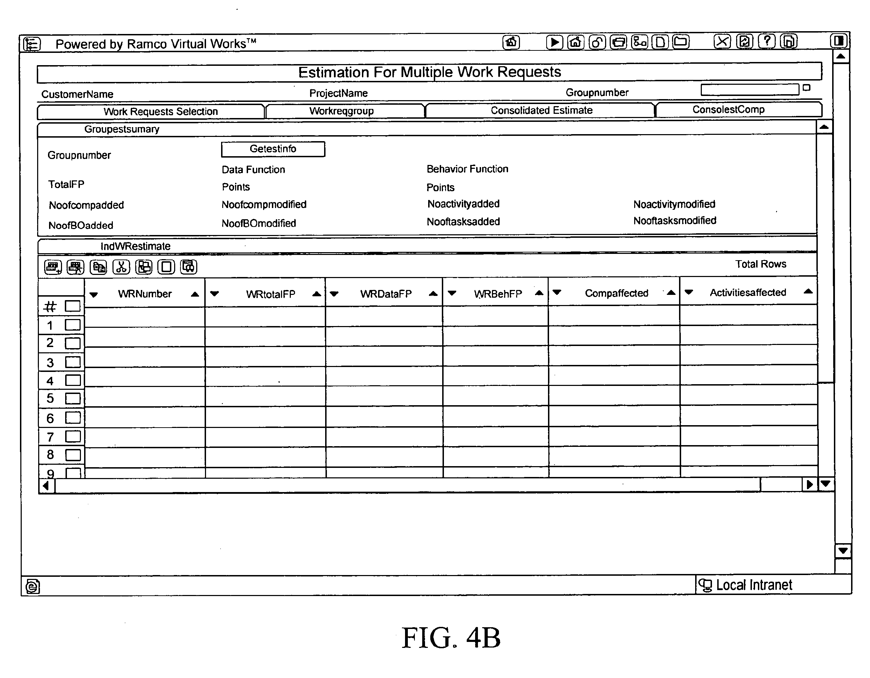

FIGS. 4A and 4B are diagrams of sample screen displays depicting estimation mechanism for work requests according to an exemplary embodiment of the present invention. Figure 4A gives a user interface which is used for calculating and fmalizing the data function points. It defaults the business objects for the equivalent component and the data function point associated with the same. The user may then modify the same and the modification may be tracked. Figure 4B depicts a user interface (UI) which enables the system to calculate the size of multiple work requests. The user chooses the set of work requests and creates a group reference. This group reference is passed on to the next tab for evaluating the size of this group. The resultant size ensures that only unique changes are handled.

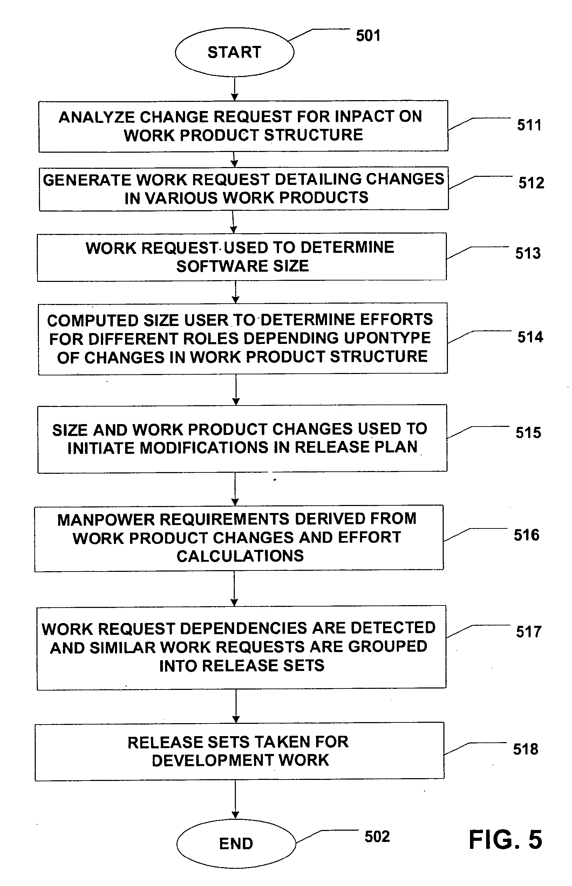

FIG. 5 is a flow diagram of a software development using software development estimation module within a software development system according to an exemplary embodiment of the present invention. The process of estimation of a release set starts at 501 and change requests are analyzed for impact on the work product structure (Process, Component, Activity, User interface, Tasks and Business rules) in operation 511. Next, work requests detailing the changes in different work products are generated in operation 512. This work request is used to arrive at the software size by software size estimation module 301 in operation 513.

The size of the software modules computed by software size estimation module 301 is used by software effort estimation module 302 to arrive at efforts for different roles depending on the types of changes in the work product structure in operation 514.

When a change to an application is contemplated, size and the work product changes are used to initiate modifications in the release plan in operation 515. Based on the work product changes and effort calculation, manpower requirement is derived to effect the changes in operation 516. From these estimates, what-if analysis may be performed.

Work requests dependencies may be detected in operation 517 using in-built rules and similar work requests are grouped into release sets. From these dependencies, separate release sets are taken for development work in operation 518. With the start of development activities, the estimation process ends 502.

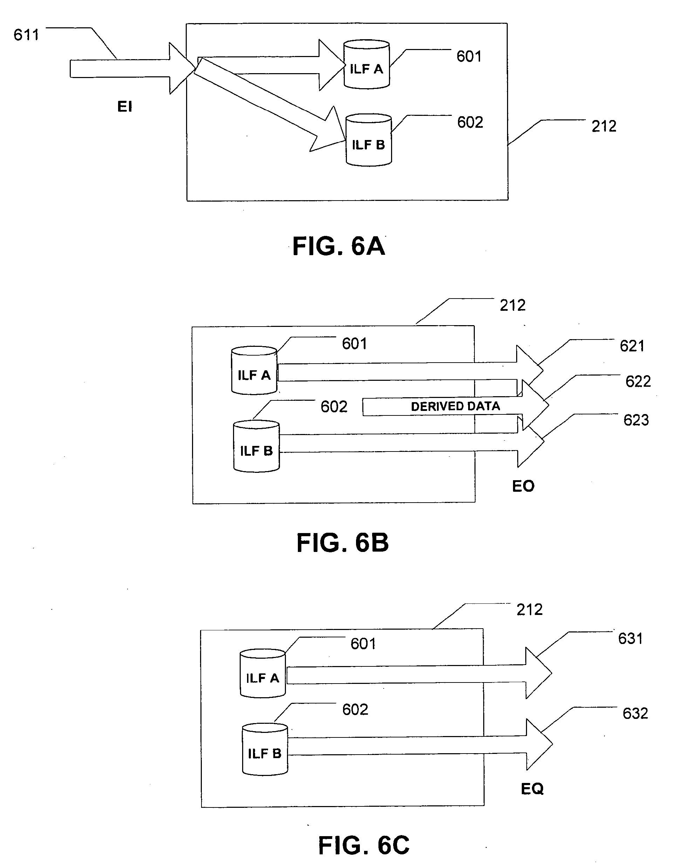

FIGs. 6A-6C is block diagrams of a function point analysis modules within a software development system according to an exemplary embodiment of the present invention. Function Points Analysis (FPA) measure software size by quantifying the functionality provided to the user based solely on logical design and functional specifications. With this in mind, the objectives of FP counting are to measure functionality that the user requests and receives; measure software development and maintenance rates and size independently of the technology used for implementation; and provide a normalizing measure across projects and organizations.

The idea of being able to measure the size of software requirements or specifications, independent of the technology used to build the software, is well known as FPA. FPA has evolved into the IFPUG method, supported by the International Function Point User Group based in the USA.

**FPA** uses a composite index of counts of the functions required (inputs, outputs, inquiries, logical files and interfaces), and of the degree of influence of some 14 quality and technical requirements. The method could therefore be used for comparing performance across projects using different technologies (using measures such as productivity, defined as size / effort) and as a first step in methods for estimating effort early in a project's life-cycle. This was a big step forward compared with the use of counts of Source Lines of Code (SLOC), which had been the only size measure up to that point.

The IFPUG 4.0 method of sizing software is based on a model of analyzing the software requirements or user functionality into five types of components, namely: External Inputs 611 (EIs - an elementary process on input or control data that comes from outside the system boundary); External Outputs 621-623 (EOs - an elementary process that generates data or control information sent outside the system boundary); External Inquiries (EQs - an elementary process made up of an input/output combination that results in data retrieval, but which does not maintain any internal logical files nor derive any data for output); Internal Logical Files 0-602 (ILFs - files whose contents are created and/or updated and/or deleted by External Inputs); and External Interface Files (EIFs - files whose contents are created, updated and deleted by other distinct software, but which are only read by the software being sized).

FIG. 6A illustrates a simple EI that updates 2 ILFs. This data may come from a data input screen or another application. The data may be used to maintain one or more internal logical files. The data can be either control information or business information. If the data is control information it does not have to update an internal logical file.

FIG. 6B illustrates an external putout 621-623 that is derived information generated from two ILFs 601-602. AN EO may update an ILF. The data may create reports or output files that may be set to other applications. These reports and files are created from one or more ILFs and EO.

FIG. 6C illustrates an EQ with two ILFs and no derived data. AN input process to an EQ does not necessarily update any ILFs and output side does not contain any derived data. These and other combinations of elements may be used in any FPA.

The five types of components within any FPA are classified as 'simple', 'average' or 'complex' depending on the number of Data Element Types (DETs) on the component and other attributes, and are awarded Unadjusted Function Points accordingly. For example a simple EI gets 3 FP, an average EI 4 FP and a complex EI 6 FP. The UFP size of an item of software is the sum of the UFP sizes of all its components of each of the five types.

The approach for software size estimation is an adaptation of the concepts published by IFPUG for Function point analysis. However, uniqueness lies in our approach towards this estimation technique. In an exemplary embodiment, a process of function point analysis is driven by the standard representation of software structure in a data model. The software structure represented as a data model consists of: component, activity, tasks and UI/data elements. These structure elements are mapped to the function point types and taken as inputs to the counting rules.

This approach also facilitates size estimation at various stages of the development cycle as given below: Quick estimate at the application scoping phase, Size estimate at the end of Requirements phase, Size estimate at the end of design phase, Final estimate on completion of the development cycle, and Size estimate during the maintenance phase for changes in the application.

The advantages of this approach towards software size estimation: size estimation based on function point analysis standards, function types are mapped internally to the software structure and this map enables automation of the function point counting at various decision points in the development life cycle, and Estimation driven by the standard representation of the software structure gives the consistency to the approach.

### RULES USED FOR FUNCTION POINT COUNT:

### I: Transaction Function Type classification

| 1 | **Transaction Function Type** | **Task Type** | **Activity Description** |
|---|---|---|---|
| 2 | EI | submit, trans | add, modify, create, maintain, edit, entry, update, write |
| 3 | EO | submit, trans | authorize, activate, inactivate, hold, amend, close, reverse, short close, confirm |
| 4 | EQ | submit, trans | fetch, get, search, find, view |

### II: Counting Rules used in FPA analysis

- 1.: When task type is either submit or trans and activity description is not falling in the given list, Transaction function type would be taken as EI.
- 2.: When task type is UI, fetch or initialize, the TF type would be EQ.
- 3.: When task type is fetch or initialize, the complexity level is defaulted to 'LOW'.
- 4.: Combos are grouped in EQ TF type by default.
- 5: For combos, FTR count is defaulted to 1 and DET count is defaulted to 2.
- 6.: For ILF counting, number of ILF is defaulted to 1.
- 7.: EIF is given as optional input entry.
- 8.: RET is number of tables in the component.
- 9.: DET for ILF is number of unique BT synonyms used in the component.
- 10.: FTR is sum of number of ILF and number of EIF.
- 11.: DET for transaction function type is sum of unique data item mapped to a task.

The following tables are used by the counting rules:

| ***ILF-EIF Complexity Table*** | | | |
|---|---|---|---|
| | 1-19 DET | 20-50 DET | 51>= |
| 1 RET | Low | Low | Average |
| 2-5 RET | Low | Average | High |
| 6>= RET | Average | High | High |

| ILF TRANSLATION TABLE | |
|---|---|
| **Functional Complexity Level** | **Unadjusted Function Point Count** |
| Low | 7 |
| Average | 10 |
| High | 15 |

| EIF TRANSLATION TABLE | |
|---|---|
| **Functional Complexity Level** | **Unadjusted Function Point Count** |
| Low | 5 |
| Average | 7 |
| High | 10 |

### Complexity Level for Transaction Function Types

| ***Complexity Level for EI*** | | | |
|---|---|---|---|
| | DET 1-4 | DET 5-15 | DET 16 > |
| FTR 0-1 | Low | Low | Average |
| FTR 2 | Low | Average | High |
| FTR 3> | Average | High | High |

| ***Complexity Level for EO*** | | | |
|---|---|---|---|
| | DET 1-4 | DET 5-15 | DET 16 > |
| FTR 0-1 | Low | Low | Average |
| FTR 2 | Low | Average | High |
| FTR 3> | Average | High | High |

| ***Complexity Level for EQ*** | | | |
|---|---|---|---|
| | DET 1-4 | DET 5-15 | DET 16 > |
| FTR 0-1 | Low | Low | Average |
| FTR 2 | Low | Average | High |
| FTR 3> | Average | High | High |

### Unadjusted Function Point Counting Procedure

| EI TRANSLATION TABLE | |
|---|---|
| **Functional Complexity Level** | **Unadjusted Function Point Count** |
| Low | 3 |
| Average | 4 |
| High | 6 |

| EO TRANSLATION TABLE | |
|---|---|
| **Functional Complexity Level** | **Unadjusted Function Point Count** |
| Low | 4 |
| Average | 5 |
| High | 7 |

| EO TRANSLATION TABLE | |
|---|---|
| **Functional Complexity Level** | **Unadjusted Function Point Count** |
| Low | 3 |
| Average | 4 |
| High | 6 |

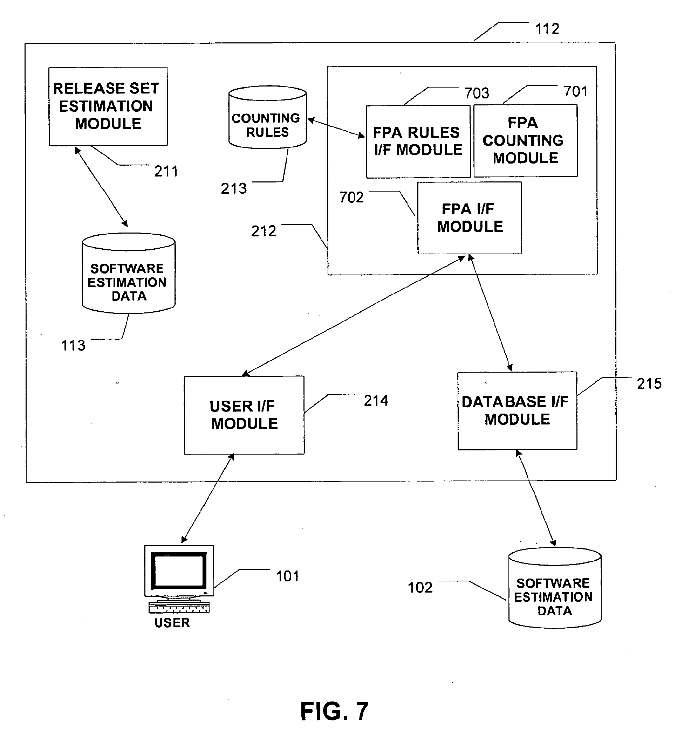

FIG. 7 is a block diagram depicting a function point analysis module 212 within a software development system in accordance with one exemplary embodiment of the present invention. The function point analysis module 212 includes a FPA counting module 701, a FPA interface module 702, and an FPA rules interface module 703. The FPA counting module 701 performs the FPA analysis by counting the points associated with software modules using the counting rules described above. The FPA rules interface module 702 provides an interface for the FPA counting module 701 to retrieve the counting rules from the counting rules database 213. The FPA rules interface module 703 provides an interface between modules within the function point analysis module 212 to user 101 and software module data within the software module database 102. Users may perform interactive FPA analysis using these modules as desired.

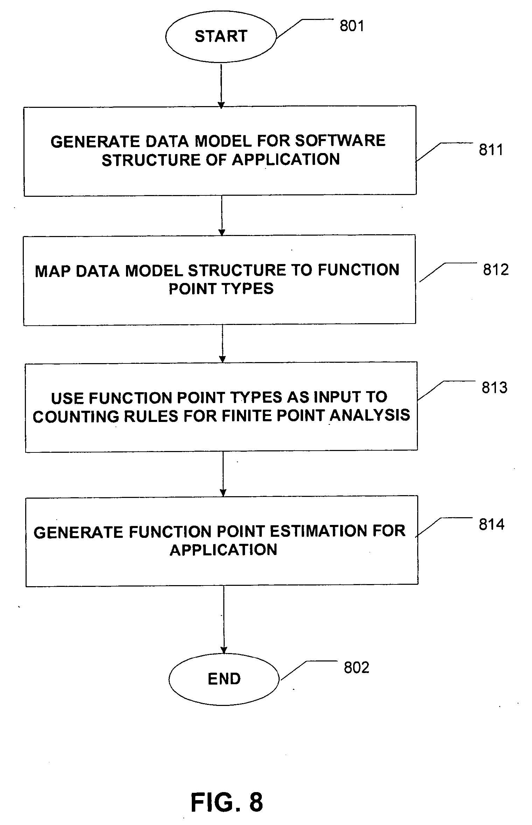

FIG. 8 is a flow diagram of a software development using function point analysis modules within a software development system according to an exemplary embodiment of the present invention. The process starts 801 and a user generates a data module for the software structure of the application in operation 811. All data model structures in the application are mapped to function-point data types in operation 812 to permit an FPA analysis to occur.

Once all data model structures have been mapped, the corresponding function point data types may be used as input to counting rules for an FPA analysis in operation 813. The counting rules are used with the function point data types in operation 814 to generate a FPA analysis estimate for a particular application. With the generation of the estimate, the process ends at 802.

Thus, a method and system to perform planning and control/estimation for software modules within an automated development system have been described. Although the present invention has been described with reference to specific exemplary embodiments, it will be evident that various modifications and changes may be made to these embodiments without departing from the broader spirit and scope of the invention. Accordingly, the specification and drawings are to be regarded in an illustrative rather than a restrictive sense.

## Claims

1. A system (100) for estimating software development activity, the system comprising:
a software coding and testing module (111) for defining and testing software applications;
a software module database (116) for maintaining software modules that may be part of software applications; and
a software estimation module (112) for estimating software development activity, the software estimation module comprising:
a release set estimation module (211); and
a function point analysis module (212).

2. The system according to claim 1, wherein the release set estimation module (211) comprises:
a software size estimation module (301) for estimating size of software modules in a software application;
a software effort estimation module (302) for estimating development effort needed for software modules in the software application;
a release set definition module (304) for defining release set data for a particular version of the software application;
wherein the software size estimation module (301) and the software effort estimation module (302) use the release set data for a particular version of the software application, wherein the software size estimation module (301) uses the function point analysis module (212).

3. The system according to claim 2, wherein the release set estimation module (211) further comprises:
a work request analysis module (303) for processing work request data to modify software size estimates and software development effort estimates in response to proposed changes to the release set data for a particular version of the software application, wherein said work request analysis module (303) generates work request dependency data using work request data to detect interrelationships between components of the software application to be modified as part of the release set data for a particular version of the software application.

4. The system according to claim 1, wherein the function point analysis module (212) comprises:
a function point analysis counting module (701) generating a function point analysis using a set of function point counting rules; and a function point analysis rules module (703) for maintaining the set of function point counting rules, wherein the function point analysis counting module (701) processes a software structure of the software application described within a data model structure, wherein the data model structure comprises component, activity, task and user interface/data elements, and wherein the function point analysis counting module (701) maps the data model structure to function point data types.

5. A method for estimating software development activity within a software application, the method comprising:
analyzing work request data (511) for impact upon software module structure;
generating work request dependency data (512) using work request data to detect interrelationships between components of the software application to be modified as part of the release set data for a particular version of the software application;
estimating size of software modules (513);
estimating development effort (514) needed for the software modules in the software application;
initiating modifications (515) on a release plan for the software application using estimates for the size of the software modules and the estimate for the development effort needed;
estimating manpower requirements (516) using estimates for the size of the software modules and the estimate for the development effort needed; and
grouping similar work requests (517) into release sets; and
developing release sets (518) to be taken for development work.

6. The method according to claim 5, wherein the step (513) of estimating size of software modules uses function point analysis, wherein the estimating development effort needed for the software modules in the software application uses function point analysis, wherein the step of estimating manpower requirements uses function point analysis and function point counting rules.

7. The method according to claim 6, wherein the step of function point analysis utilizes a data model structure to define a software structure of the software application, wherein the data model structure comprises component, activity, task and user interface/data elements, wherein the function point counting module maps the data model structure to function point data types.

8. A machine-readable medium storing a set on instructions that, when executed by a machine, cause the machine to perform a method for analyzing interactions among software artifacts, the method comprising:
analyzing work request data (511) for impact upon software module structure;
generating work request dependency data (512) using work request data to detect interrelationships between components of the software application to be modified as part of the release set data for a particular version of the software application;
estimating size of software modules (513);
estimating development effort (514) needed for the software modules in the software application;
initiating modifications (515) on a release plan for the software application using estimates for the size of the software modules and the estimate for the development effort needed;
estimating manpower requirements (516) using estimates for the size of the software modules and the estimate for the development effort needed; and
grouping similar work requests (517) into release sets; and
developing release sets (518) to be taken for development work.

9. The machine-readable medium according to claim 8, wherein the step of estimating size of software modules uses function point analysis, wherein the step of estimating development effort needed for the software modules in the software application uses function point analysis.

10. The machine-readable medium according to claim 8, wherein the step of estimating manpower requirements (516) uses function point analysis and function point counting rules (213), wherein the function point analysis utilizes a data model structure to define a software structure of the software application, wherein the data model structure comprises component, activity, task and user interface/data elements, wherein the function point counting module maps the data model structure to function point data types.
